# EUROPEAN PATENT APPLICATION

(11) **EP 3 991 961 A1**
(43) Date of publication of application: **04.05.2022**
(21) Application number: 20934236.9
(22) Date of filing: 31.12.2020
(51) Int. Cl.: B32B 5/02, D01D 5/24

(54) **CORE FOR VACUUM INSULATING MATERIAL, AND METHOD FOR MANUFACTURING SAME**

(30) Priority: 14.09.2020 KR 20200117997
(71) Applicant: Slab Asia Co., Ltd., Jeju-si Jeju-do 63227 (KR)
(72) Inventor: LEE, Su Ah, Seoul 06335 (KR); KIM, Chang Ho, Yongin-si, Gyeonggi-do 16952 (KR); JEON, Hye Lim, Seoul 06327 (KR); GO, Eun Byeol, Hanam-si, Gyeonggi-do 12913 (KR); BAIK, Kyung Ha, Seoul 06226 (KR)
(74) Representative: Ricker, Mathias
(86) International application number: PCT/KR2020/019504
(87) International publication number: WO 2022/055046

(57) **Abstract**

Provided are a core material for a vacuum insulation panel, a vacuum insulation panel, an insulated container, and a method for manufacturing a core material for a vacuum insulation panel. A core material for a vacuum insulation panel includes: an intermediate layer comprising a polyester fiber or a polypropylene (PP) fiber; and an outer layer laminated on the intermediate layer; wherein the outer layer comprises a thermoplastic fiber capable of thermal bonding.

## Description

### [Technical Field]

The present disclosure relates to a core material for a vacuum insulation panel, a vacuum insulation panel, an insulated container, and a method for manufacturing a core material for a vacuum insulation panel.

### [Background Art]

In recent years, as the e-commerce market develops and the untact industry and K-food industry or marketing draw attention, the insulation performance of the container containing the product during storage or transportation is becoming particularly important. For example, to deliver or store goods such as refrigerated or frozen food to the purchaser while maintaining freshness, to safely ship or store medicines sensitive to temperature changes, or to improve the insulation performance of containers, the research on excellent insulator is being actively pursued.

The insulator is a material for minimizing heat loss to the outside or heat gain therefrom, and is manufactured to lower thermal conductivity. Insulation materials can be divided into various products depending on the manufacturing method or internal structure. Recently, interest in vacuum insulation panels manufactured by wrapping a core material with an outer skin material composed of a gas barrier film with low gas permeability to form a vacuum is increasing.

In general, the nonwoven fabric used for the core material for insulator is manufactured through processes such as a preparation process including opening, mixing, and carding of raw materials, a web forming process, a web bonding process, and a post-processing. The web forming process is to form a web by cutting, arranging, spinning, etc. the fibers that will constitute the fiber layer, and the web forming methods include a wet method, a dry method, a spinning method, and an electrospinning method. Thereafter, a nonwoven fabric is formed through a web bonding process by bonding the formed web, which means forming into a sheet form that does not loosen through adhesion or bonding between fibers. The web bonding methods include a mechanical bonding method, a chemical bonding method, a thermal bonding method, and the like.

Specifically, the mechanical bonding method may include needle punching, stitch bonding, water flow bonding (spunlace method), and the like, and the chemical bonding method may include immersion, spraying, foaming, powder bonding, printing, and the like. Examples of the thermal bonding method include roll & belt calendaring, air-through bonding, ultrasonic bonding, infrared bonding, and the like.

### [Disclosure of Invention]

### [Technical Problem]

Conventional vacuum insulation panels are typically manufactured using materials such as glass wool, silica powder, etc., due to the characteristics of the materials with low thermal conductivity. However, since the glass wool or silica powder has the form of fine particles, the handleability thereof is low and the productivity of the worker in the manufacturing process may be lowered, and there is a risk of harming health. For this reason, recent attempts have been made to manufacture a core material for a vacuum insulation panel using organic synthetic fibers instead of using glass wool. However, in the case of manufacturing a core material for a vacuum insulating panel including only organic synthetic fibers, there was a problem that the stacked core material was pushed through while undergoing a vacuum process.

In another attempt to manufacture a core material for a vacuum insulation panel, using a needle punching process to form a web was tried for bonding fibers to a web . The needle punching process is widely used because it is known to be easy to bond and form a web and has an advantage of increasing the density of the web by increasing the number of strokes. However, the inventors of the present application have found the problem in that when a web for use as a core material for a vacuum insulation panel is formed by a needle punching process, thermal resistance loss occurs due to a hole generated by passing barb or needle tip and deteriorates the long-term vacuum insulation performance. In addition, when a vacuum insulation panel is manufactured by laminating the manufactured nonwoven fabric layer in several layers to provide enough thermal insulation performance suitable for the product, it has been found that the slipping phenomenon occurs when it undergoes the vacuum process. Due to this interlayer slipping phenomenon, a fault is generated, a defect rate of the final product is increased, or a size unsuitable for an application is produced. Further, there is a problem that it is difficult to apply to the specifications of the generally used delivery container.

The present disclosure has been made in recognition of these problems and provides a core material for a vacuum insulation panel with improved thermal insulation performance and mechanical durability, a manufacturing method thereof, a vacuum insulation panel to which the same is applied, and an insulated container.

### [Technical Solution]

A core material for a vacuum insulation panel according to an embodiment of the present disclosure includes an intermediate layer including a polyester fiber or a polypropylene (PP) fiber; and an outer layer laminated on the intermediate layer; wherein the outer layer includes a thermoplastic fiber capable of thermal bonding.

According to some embodiments of the present disclosure, the thermoplastic fiber may be selected from an ethylene-propylene side by side (ES) fiber, a polypropylene (PP) fiber, a low-melting polyethylene terephthalate (LMPET) fiber, or a composite fiber thereof.

According to some embodiments of the present disclosure, the polyester fiber may be a polyethylene terephthalate (PET) fiber, and the thermoplastic fiber may be an ethylene-propylene side by side (ES) fiber.

According to some embodiments of the present disclosure, the thermoplastic fiber in the outer layer may be included in an amount of 15 to 25% by weight based on the weight of the core material.

According to some embodiments of the present disclosure, a plurality of the outer layer and the intermediate layer may be included, wherein the outer layer and the intermediate layer may be alternately laminated.

According to some embodiments of the present disclosure, the intermediate layer may contain 100% by weight of polypropylene (PP) fibers.

According to some embodiments of the present disclosure, a plurality of the intermediate layers may be laminated, and the outer layers may be laminated on the uppermost and lowermost end of the intermediate layer.

According to some embodiments of the present disclosure, the core material may have a thickness of about 3 to about 7 mm after vacuum.

A vacuum insulation panel according to an embodiment of the present disclosure may include the core material according to embodiments of the present disclosure.

According to some embodiments of the present disclosure, the vacuum insulation panel may further include comprising an envelope for vacuum-packing the core material.

According to some embodiments of the present disclosure, the vacuum insulation panel may further include a getter for adsorbing and removing moisture or gas.

According to some embodiments of the present disclosure, the initial thermal conductivity of the vacuum insulation panel is about 18 mW/mK or less.

An insulated container according to an embodiment of the present disclosure may include the vacuum insulation panel according to embodiments of the present disclosure.

A method for manufacturing the core material for a vacuum insulation panel according to an embodiment of the present disclosure may include: carding polyester fibers or polypropylene (PP) fibers; carding a thermoplastic fiber capable of thermal bonding; stacking and arranging the carded fibers so that the thermoplastic fibers are positioned on an outer layer when laminated; and forming a core material by bonding the fibers stacked and arranged through thermal bonding.

According to some embodiments of the present disclosure, the method for manufacturing the core material for a vacuum insulation panel may further include the step of partially bonding the fibers stacked and arranged through minimal needle punching between the step of stacking and the step of forming the core material.

A method for manufacturing the core material for a vacuum insulation panel according to an embodiment of the present disclosure may include: forming an intermediate layer comprising polyester fibers or polypropylene (PP) fibers by needle punching; forming an outer layer comprising thermoplastic fibers by spun bonding or thermal bonding; and laminating the outer layer and the intermediate layer.

### [Advantageous Effects]

The present disclosure provides a core material for a vacuum insulation panel with improved durability and thermal insulation performance without using glass wool with low productivity or handleability.

Since the core material for a vacuum insulation panel of the present disclosure does not depend on the needle punching process and undergoes thermal bonding, the density of the nonwoven fabric for the core material is increased and provides improved long-term thermal insulation performance. In addition, the core material of the present disclosure can secure high thermal insulation performance and mechanical durability of the vacuum insulation panel while being cost-effective, easy to manufacture, and can apply a nature-friendly process.

In addition, the core material for a vacuum insulation panel of the present disclosure has increased shape stability, and when used as a vacuum insulation panel, it provides sufficient durability and thermal insulation effect even with a thin thickness. For this reason, the present disclosure provides an advantage when used for applications requiring weight reduction and volume optimization, such as insulation boards, delivery applications, and delivery containers.

In addition, the present disclosure provides a vacuum insulation panel capable of controlling convection, radiation, and conduction of heat transfer by using the core material of the present disclosure, and provides an insulated container with improved thermal insulation performance by employing the same.

### [Brief Description of the Drawings]

FIG. 1 illustrates an example of a vacuum insulation panel according to an embodiment of the present disclosure.
FIG. 2 illustrates an example of a core material for a vacuum insulation panel according to an embodiment of the present disclosure.
FIG. 3 illustrates an example of the laminated structure of the core material for a vacuum insulation panel according to an embodiment of the present disclosure.
FIG. 4 illustrates another example of the laminated structure of the core material for a vacuum insulation panel according to an embodiment of the present disclosure.
FIG. 5 illustrates an exemplary perspective view of an insulated container according to an embodiment of the present disclosure.
FIG. 6 illustrates an exemplary exploded perspective view of the insulated container of FIG. 5.
FIG.7 is a figure comparing the thickness and density of the nonwoven fabric according to the change in the number of strokes during needle punching.
FIG.8 is a figure showing an example of a test piece having a two-layer laminate structure.

### [Best Mode for Carrying Out the Invention]

A core material for a vacuum insulation panel according to an embodiment of the present disclosure includes an intermediate layer comprising polyester fibers or polypropylene (PP) fibers and an outer layer laminated on the intermediate layer, wherein the outer layer includes a thermoplastic fiber capable of thermal bonding.

### [Mode for Carrying Out the Invention]

Hereinafter, embodiments of the present disclosure will be described in detail with reference to the accompanying drawings so that those of ordinary skill in the art can easily carry out the embodiments of the present disclosure. However, the present disclosure may be embodied in many different forms and is not limited to the embodiments described herein. And to clearly explain the present disclosure in the drawings, parts irrelevant to the description are omitted, and similar reference numerals are attached to similar parts throughout the specification. In addition, to clearly express various layers and regions in the drawings, the thicknesses are enlarged or reduced, or, for the convenience of explanation, the thicknesses of some layers and regions are exaggerated.

Throughout the specification and claims, when a part "includes" a certain element, it means that other elements may be further included, rather than excluding other elements, unless otherwise stated.

As used herein, the term "nonwoven fabric" includes a lexical meaning that the fibers are bonded to each other by treating a fiber aggregate or sheet by physical or chemical means, mechanically, or with appropriate moisture or heat, includes a fiber aggregate or sheet itself that is manufactured through a web-forming and web bonding process and constitutes the core material, and includes embodiments within a range that those of ordinary skill in the art can understand.

As used herein, the term "nonwoven layer" refers to an individual layer, particularly when the core material is formed of a plurality of layers.

As used herein, the term "thermal bonding" refers to applying heat with a heat source such as high pressure, hot air, ultrasonic waves, infrared rays, etc. to induce melt adhesion of fibers to form a web through bonding between fibers in a nonwoven fabric or to form bonding between nonwoven layers, and such web-forming bonding and interlayer bonding may occur separately or simultaneously. Generally, roll & belt calendering, air-through bonding, ultrasonic bonding, infrared bonding, and the like are used, but are not limited thereto.

As used herein, the term "stroke" refers to the number of times of needle up-and-down movement in needle punching during the process of manufacturing a nonwoven fabric, and the unit is stroke/min.

As described above, when the core material for forming the vacuum insulation panel is manufactured through mechanical web bonding, there is a problem in that the insulation performance of the vacuum insulation panel is deteriorated or the mechanical durability is deteriorated. For example, in the case of bonding the web by the needle punching process, the web is bonded in a manner that a needle penetrates the fiber layer to entangle the fibers and penetrates nonwoven fabric, and generally the number of strokes is increased to improve handleability and increase the density of the fabric. The inventor of the present disclosure has found that a denser nonwoven fabric can be formed with this approach, but a hole is generated on the surface of the nonwoven fabric due to the needle tip, and heat resistance loss occurs from the hole, which adversely affects the thermal insulation performance. Therefore, in the case of the mechanical bonding method, the thermal insulation performance of the nonwoven fabric is not sufficiently secured due to the characteristics of the process. Also, there is a problem that the needle used in the mechanical bonding may be damaged.

On the other hand, when a material that forms a web through chemical bonding is used as a core material for forming a vacuum insulation panel, there are problems that a curing process for evaporating moisture is required, manufacturing costs such as wastewater treatment are quite high, and it is difficult to form a sufficiently thick web because of high chance that the adhesive is non-uniformly applied to the core material.

In addition, the above-mentioned problems relate to problems in web bonding within the nonwoven fabric only; when the nonwoven fabric layer prepared in this way is laminated to form a core material as needed, there is problem with the occurrence of slipping after use period, or during the processing or manufacturing process such as vacuum packaging of the core material.

Accordingly, the present disclosure provides a core material for a vacuum insulation panel which exhibits sufficient thermal insulation performance even at a thin thickness, which does not exhibit a slipping phenomenon, etc. when undergoing the vacuum process, and which provides improved durability when applied to a vacuum insulation panel, and a method for manufacturing the same with improved handling and convenience in the manufacturing process.

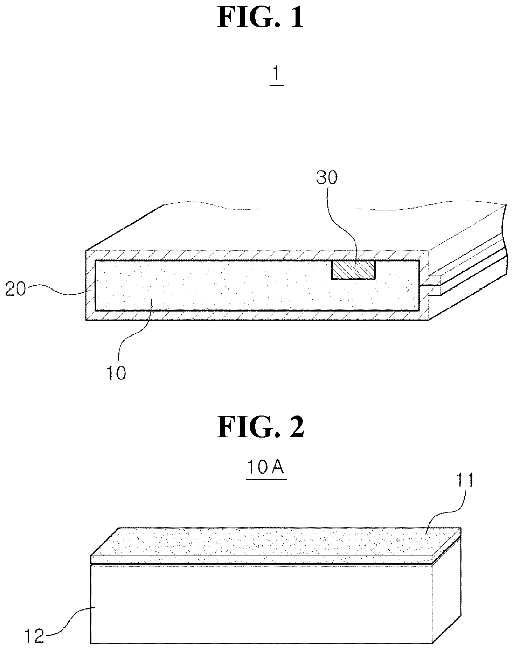

FIG.1 illustrates an example of a vacuum insulation panel according to an embodiment of the present disclosure.

Referring to FIG. 1, a vacuum insulation panel 1 according to an embodiment of the present disclosure may include a core material 10, an envelope 20 and an adsorbent 30, and FIG.1 shows an exemplary cross-section of the vacuum insulation panel sealed in a state in which the envelope 20 is in close contact with the surface of the core material 10.

The core material 10 of the present disclosure will be described later with reference to FIGs. 2 to 4.

The the envelope 20 may be an encapsulant surrounding the core material 10 to vacuum-pack the core material 10. In one embodiment, the envelope 20 may include a film, a metal barrier layer, and an adhesive layer.

The film may be a layer exposed to the outside of the envelope 20. The film may support the metal barrier layer so that cracks do not occur when the metal barrier layer is folded. The film serves as a gas barrier film that blocks moisture and various gases such as oxygen and carbon dioxide, and may comprise for example, at least one of polyvinylidene chloride (PVDC), polyethylene (PE), polypropylene (PP), polyethylene terephthalate (PET), ethylene-vinyl alcohol copolymer (EVOH), polyvinyl-alcohol (PVOH), graphene oxide (PVA/GO), polylactic acid (PLA), and nylon but the scope is not limited thereto.

For example, the film may be formed of a polyethylene terephthalate (PET) film of a predetermined thickness (e.g., a thickness of about 10 µm to about 14 µm), or a polyethylene terephthalate (PET) film and a nylon film of a predetermined thickness (e.g., a thickness of about 20 um to about 30 um) may be formed in a laminated structure. On the other hand, to further increase the durability of the film, a vinyl-based resin layer comprising one or more vinyl-based resins selected from the group consisting of for example, polyvinyl chloride (PVC), polyvinyl acetate (PVA), polyvinyl alcohol (PVAL), polyvinyl butyral (PVB), polyvinylidene chloride (PVDC) and combinations thereof may be coated.

A metal barrier layer may be formed under the film. The metal barrier layer is a layer for blocking gas and moisture, protecting the core material 10, and performing a function of blocking radiation, and can be formed of a thin metal film of a predetermined thickness (for example, a thickness of about 6 µm to about 7 µm). In one embodiment of the present disclosure, the metal barrier layer may include, for example, aluminum foil or copper foil, but the scope of the present disclosure is not limited thereto.

The adhesive layer is a layer that is thermally welded by heat sealing and has a function of maintaining a vacuum state. To provide such sealing properties, the adhesive layer may be formed with a thermoplastic plastic film having a predetermined thickness (e.g, a thickness of about 1 µm to about 100 µm) that is easily heat-sealed. In one embodiment of the present disclosure, at least one selected from the group consisting of high density polyethylene (HDPE), low density polyethylene (LDPE), linear low density polyethylene (LLDPE), casting polypropylene (CPP), oriented polypropylene (OPP), polyvinylidene chloride (PVDC), polyvinyl chloride (PVC), ethylene-vinyl acetate copolymer (EVA), ethylene-vinyl alcohol copolymer (EVOH), and combinations thereof may be included.

The adsorbent 30 may adsorb and remove moisture or gas that may be generated inside the envelope 20 due to, for example, an external temperature change. In one embodiment of the present disclosure, the adsorbent 30 may be formed in the form of a pouch including at least one of a material that acts as a moisture absorbent, for example, silica gel, zeolite, activated carbon, zirconium, barium compound, lithium compound, magnesium compound such as magnesium oxide (MgO), calcium compound such as calcium oxide (CaO), and the like, but the scope of the present disclosure is not limited thereto. In this case, the pouch may also be manufactured using a nonwoven fabric having moisture or gas absorption performance.

As shown in FIG. 1, the adsorbent 30 may be inserted into the core material 10, and in this case, the envelope 20 can be sealed with the adsorbent 30 inserted into the core material 10. Of course, unlike shown in FIG. 1, the adsorbent 30 may be disposed attached to the surface of the core material 10, and in this case, envelope 20 can also be sealed with the adsorbent 30 attached and protruded on the surface of the core material 10.

The initial thermal conductivity of the vacuum insulation panel 1 of the present disclosure may be about 18 mW/mK or less.

Hereinafter, a core material for a vacuum insulation panel of the present disclosure will be described with reference to FIG. 2, which is only a reference example and the scope of the present disclosure is not limited thereto.

The core material 10A for a vacuum insulation panel according to an embodiment of the present disclosure is formed in a laminated structure of an outer layer 11 and an intermediate layer 12. A plurality of the outer layer 11 and the intermediate layer 12 may be laminated and bonded to constitute a core material, and each layer provides an insulating effect.

The outer layer of the present disclosure includes thermoplastic polymer fibers that may be partially melt-bonded to form an interlayer bond with the intermediate layer, or may be melt-bonded between fibers to form a nonwoven fiber layer. These thermoplastic materials increase in density by thermal bonding and function as a support, which in turn causes the outer layer to function as a support layer for supporting the intermediate layer. That is, the outer layer includes the thermoplastic polymer fiber and is formed by thermal bonding, thereby may increase the morphological stability of the inner material. In addition, morphological stability is maintained even when the vacuum process is performed during the vacuum insulation panel manufacturing process, and results in improvement of initial thermal conductivity. Accordingly, the vacuum insulation panel using the core material of the present disclosure exhibits an initial thermal conductivity of about 18 mW/mK or less.

Example of the thermoplastic fiber capable of thermal bonding included in the outer layer of the present disclosure may include, ethylene-propylene side by side (ES) fiber, polypropylene (PP) fiber, and low melting point polyethylene terephthalate (LMPET) fibers and the like, and preferably ES fibers or PP fibers.

The ES fiber that can be used for the outer layer of the present disclosure is a composite fiber made by combining two components having different melting points, and is generally composed of two components of PE/PP, and can be formed as a composite fiber with for example, PE, PP, PET, etc. In the present disclosure, when heat is passed through the ES fiber, it can be melted and thermally bonded, so it can be formed into a nonwoven fabric without using an adhesive component, and when heat is applied, the low melting point portions, such as PE fiber portions melt and form the bonding with the fibers around, but the high melting point portions, such as PP fiber portions, remain in the form of fibers. Accordingly, the characteristics of the PP fiber yarns are maintained as they are, so that it can be easily and quickly formed into the nonwoven fabric.

The ES fiber used in the present disclosure may have a melting point in the range of about 100°C to about 150°C. The structure of the ES fiber used in the present disclosure may include, but not limited to, a core-shell, side-by-side, sea-island structure, and the like, and fibers of various structures within the scope that do not impair the effects of the present disclosure can be used.

The PP fiber that can be used for the outer layer of the present disclosure may have a melting point of about 160° C., but the scope of the present disclosure is not limited thereto. The PP fiber that may be included in the outer layer of the present disclosure may be hydrophilic polypropylene, and may have the form of a staple fiber, filament fiber, hollow fiber structure or an open cell foam. In the case of hydrophilic polypropylene, long-term thermal insulation performance can be expected because the hydroxyl group plays a role in controlling residual gas and moisture.

In the case of the low-melting-point polyester (LMPET) fiber that can be used for the outer layer of the present disclosure, the melting point thereof is preferably in the range of about 110 °C to about 180 °C, but the scope of the present disclosure is not limited thereto.

In one embodiment of the present disclosure, the outer layer may be made of only thermoplastic fibers capable of thermal bonding. Alternatively, in consideration of the type of fiber, thermal insulation effect, bonding strength with the support layer, etc., it may be included in a content of a range of specific wt% based on the weight of the core material. For example, when the thermoplastic fiber in the outer layer of the present disclosure is formed of ES fibers and the intermediate layer is formed of PET fibers, the ES fibers may be included in an amount of about 10 to about 30% by weight, preferably about 15 to about 25% by weight, more preferably about 20±2% by weight based on the weight of the core material. When the thermoplastic material capable of thermal bonding in the outer layer is included in an amount of less than 5% by weight based on the weight of the core material, it may tend to adversely affect the morphological stability of the manufactured core material.

In one embodiment of the present disclosure, the thickness of the polymer fibers used in the outer layer may be about 1 to about 15 denier and it is preferable that the thickness of the fibers of the outer layer is thicker than the thickness of the fibers of the intermediate layer. In one embodiment of the present disclosure, the diameter of the polymer fibers used in the outer layer may be about 10 to about 50 um, and the diameter of the fibers of the outer layer may be thicker than the diameter of the fibers of the intermediate layer. In one embodiment of the present disclosure, the average length of the polymer fibers used in the outer layer may be preferably about 30 to about 60 mm, but the average length of the fibers may vary depending on the specific manufacturing purpose of the present disclosure within the range that can be modified by a person skilled in the art.

In one embodiment of the present disclosure, the intermediate layer is composed of fibers having low thermal conductivity, and may be formed of polyester fibers or polypropylene (PP) fibers.

The polyester fibers forming the intermediate layer of the present disclosure may be, for example, aliphatic polyester fibers or aromatic polyester fibers or mixtures thereof. The aliphatic polyester fiber may be composed of an aliphatic homopolymer, an aliphatic copolymer, or a mixture thereof. Exemplary aliphatic homopolymers may be, for example, polyglycolic acid (PGA), polylactic acid (PLA), polycaprolactone (PCL), polyhydroxyalkanoate (PHA), polyhydroxy butyrate (PHB), and the like. Exemplary aliphatic copolymers may be, for example, polybutylene succinate (PBS), poly-3-hydroxybutyrate-co-3-hydroxyvalate (PHBV), and the like. The aromatic polyester fibers may be aromatic copolymers or mixtures thereof. Exemplary aromatic copolymers include, for example, polyethylene terephthalate (PET), polybutylene terephthalate (PBT), polytrimethylene terephthalate (PTT), polyethylene naphthalate (PEN), Vectran^{®} fibers, mixtures thereof and the like, and examples of polyethylene terephthalate (PET) include high-melting-point polyethylene terephthalate and low-melting-point polyethylene terephthalate.

Polypropylene (PP) fibers forming the intermediate layer of the present disclosure may be manufactured in a web form by arranging fibers through a carding process and entangling them, manufactured as a non-woven fabric by thermally bonding by using a calender roller, or manufactured as a non-woven fabric by bonding the web that has undergone the carding process with the heated air in a porous drum that refluxes, that is, using hot air instead of using a calender roller.

The thickness of the polymer fiber used in the intermediate layer of the present disclosure may be from about 1 to about 6 denier, preferably from about 1.5 to about 4 denier, and may be used as a mixture with the fibers with other ranges that does not impair the purpose of the present disclosure. The diameter of the polymer fiber used in the intermediate layer of the present disclosure may be about 10 to about 50 um, but is not limited thereto. In one embodiment of the present disclosure, the average length of the polymer fibers used in the intermediate layer may be about 30 to about 60 mm, but is not limited thereto.

The thickness, diameter, and length of the fibers used in the present disclosure may vary depending on the type and combination of fibers used. For example, according to an exemplary embodiment of the present disclosure, when ES fiber is included as the thermoplastic fiber in the outer layer of the present disclosure, and the intermediate layer is formed of the PET fiber, the thickness of the ES fiber may be about 4 to about 15 denier, more preferably about 6 to about 10 denier, and the diameter of the ES fiber may be from about 25 to about 50 um, preferably from about 31 to about 40 um. In this case, the thickness of the PET fiber may be from about 1 to about 6 denier, more preferably from about 1.5 to about 4 denier, and the diameter of the PET fiber may be from about 10 to about 25 um, preferably from about 12 to about 20 um. According to another embodiment of the present disclosure, the diameter of the PP fiber may be used, for example, in the range of from about 12 to about 31 um, preferably from about 15 to about 25 um.

In one embodiment of the present disclosure, the weight ratio of the fibers of the outer layer and the intermediate layer may be about 20:80 to about 40:60, but the scope of the present disclosure is not limited thereto.

In one embodiment of the present disclosure, the unit weight of the core material may be about 30 to about 1000 g/m², preferably about 300 to about 600 g/m², and the density of the core material may be about 100 to about 500 kg/m³.

The thickness after vacuum of the core material of the present disclosure may vary depending on the field or product to be applied, but the minimum thickness showing the insulation effect is about 0.1 mm or more, which is much thinner than conventional insulation materials such as foamed plastics which are used as conventional insulation materials and has a higher insulation effect. The thickness after vacuum of the preferred core material according to the present disclosure may be from about 0.1 to about 50 mm, preferably from about 3 to about 7 mm. In the case of the core material according to the embodiments of the present disclosure, since it provides sufficient thermal insulation effect even though the thickness is thin after vacuum, the form of an insulation board or the vacuum insulation panel itself can be used for transportation or delivery.

### Multi-layer structure of core material for vacuum insulation

The core material for vacuum insulation panel according to an embodiment of the present disclosure may be formed by stacking a plurality of outer layers and intermediate layers in addition to the above-described core material having a two-layer structure of outer and intermediate layers. More specifically, in this embodiment, a laminated nonwoven fabric having a laminated structure of three or more layers, that is, a core material can be obtained.

In one embodiment, the core material may be formed in a stacked structure such that a plurality of intermediate layers are stacked between a plurality of outer layers. For example, the core material may be formed in a laminated structure in which the intermediate layer is disposed between two outer layers. In another embodiment, the core material may be formed in a stacked structure such that the outer layer and the intermediate layer sequentially stacked alternately. The plurality of outer layers may be formed of fibers of a material having the same fiber composition or may be formed of fibers of a material having a different fiber composition. For example, one outer layer of the two outer layers is formed comprising one component construction, such as ES fibers, and the other outer layer is formed comprising another component composition, such as LMPET fibers, as such different fiber constitutions may be applied to the plurality of outer layers depending on the implementation purpose.

For the details of the outer layer and the intermediate layer applicable to the present embodiment, the description of the above-described outer layer and the intermediate layer may be applied, and thus the overlapping description will be omitted herein.

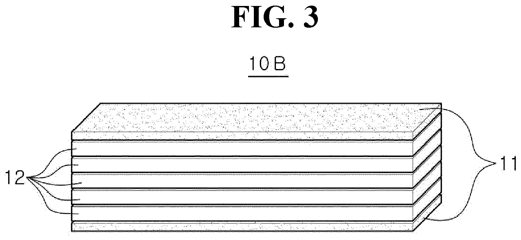

FIG. 3 is an exemplary view for explaining the laminated structure of the core material for a vacuum insulation panel according to an embodiment of the present disclosure.

Referring to FIG. 3, the core material 10B for a vacuum insulation panel according to an embodiment of the present disclosure may include a plurality of intermediate layers 12. As such, when a plurality of the intermediate layer forms stacked structures, the outer layer 11 may be included only as the uppermost and lowermost layers.

In an exemplary embodiment of the present disclosure, when the intermediate layer is formed of polypropylene (PP) fibers, the intermediate layer is formed by needle punching, and an outer layer formed by spun bonding or thermal bonding using a thermoplastic polymer capable of thermal bonding, for example, PET, PE, PP, etc., may be disposed at the top and bottom as a support layer.

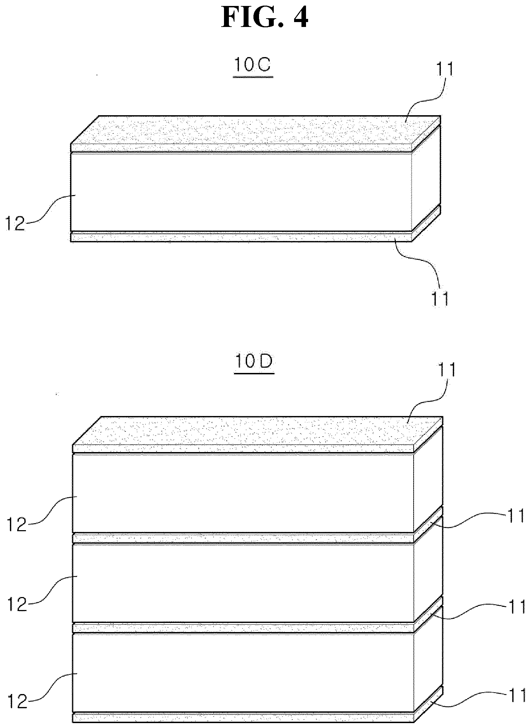

FIG.4 illustrates another example of the laminated structure of the core material for vacuum insulation panel according to an embodiment of the present disclosure.

Referring to FIG 4, the vacuum insulation core (10C, 10D) according to an embodiment of the present disclosure, as described above, the outer layer 11 and the intermediate layer 12 may be formed in a structure in which several layers are alternately stacked.

Specifically, the core material 10C is an example of a stacked structure of three or more layers, and may be formed in a stacked structure such that the intermediate layer 12 is disposed between the two outer layers 11.

Further, as another example of a stacked structure of four or more layers, the core material 10D may be formed in a stacked structure in which four outer layers 11 and three intermediate layers 12 are alternately disposed. In this way, a more stable and durable core material can be formed due to a structure in which the outer layer and the intermediate layer are stacked alternatively.

Although the plurality of outer layers 11 are denoted by the same reference numerals in the drawing, for the plurality of outer layers 11, in which at least some of the layers may be formed of the fibers with the same fiber composition (i.e., same fibers that may be melt-bonded to each other), or at least some of the layers may be formed of fibers with the different materials having different fiber compositions (i.e., different fibers that may be melt-bonded to each other). In addition, although the plurality of intermediate layers 12 are denoted by the same reference numerals in the drawings, for the plurality of intermediate layers 12, in which at least some of the layers may be formed of the fibers with the same fiber composition, or at least some of the layers may be formed of fibers with the different materials having different fiber compositions and a person skilled in the art can understand this.

### Manufacturing method of core material for vacuum insulation panel

Conventionally, it was common to form a nonwoven fabric with a single PET fiber or by needle-punching a single PET fiber. However, in the present disclosure, by comprising fibers that is applicable to use a thermal bonding method in the outer layer, a cost-effective, easy-to-manufacture, and nature-friendly process can be applied in the manufacture process, and the durability and the insulation ability of the insulation panel are improved.

The outer layer and the intermediate layer of the core material for a vacuum insulation panel according to an embodiment of the present disclosure may be formed into a sheet form and simultaneously the intermediate layer and the outer layer may be combined by using a thermal bonding method. For example, in an exemplary embodiment of the present disclosure, when ES fibers are included as thermoplastic fibers capable of thermal bonding in the outer layer, and the intermediate layer includes PET fibers as fibers with low thermal conductivity, each fiber may be subjected to a respective carding process, arrangement and stacking process, and minimal needle punching process, and thermal bonding to manufacture the core material. Alternatively, the core material may be manufactured through only a thermal bonding method after arrangement and stacking through carding process.

When a minimal needle punching process is used together in the present disclosure, since the present disclosure does not depend on the needle punching process, needle punching is performed at a stroke of about 100 to 400 strokes/min or less, preferably about 100 to 200 strokes/min or less, and after the process, they are thermally bonded to form the outer layer and to produce the core material.

In addition, when the needle punching process is not used in the present disclosure, the outer layer may be formed as a web by thermal bonding while the interlayer bonding with the intermediate layer can be achieved at the same time. Thereby, a dense outer layer is formed, and it is possible to provide a core material for a vacuum insulation panel having good morphological stability with high process efficiency.

In another embodiment of the present disclosure, the core material may be used after being prepared in the form of respective sheet and laminated as a non-woven fabric layer. The outer layer of the present disclosure may be formed by spun bonding or thermal bonding for surface planarization, and the intermediate layer may be formed by needle punching and then each layer may be laminated. For example, when PP fiber is comprised in the outer layer and the intermediate layer of the present disclosure, a web to be a sheet-shaped support layer may be formed by a spun bonding process, a web to be an intermediate layer may be formed by a needle punching process, and then these can be laminated. In this embodiment, a needle punching process may be employed in forming the intermediate layer, and to minimize the heat loss effect by the aforementioned needle punching process, the number of strokes can be controlled to about 600 strokes/min or less, preferably about 100 to about 400 strokes. In addition, the weight of the nonwoven layer can be controlled from about 300 to about 600 gsm (g/m²). In the case of the core material for a vacuum insulation panel according to this embodiment, since the outer layer planarized through spun bonding or thermal bonding functions as a support, durability and morphological stability are increased compared to the case where only the needle-punched intermediate layer is used as the core material. In the case of laminating the non-planarized intermediate layer and the outer layer, the slipping phenomenon is decreased even without a separate bonding process, and morphological stability was maintained after vacuum. In addition, when the core material is manufactured using one type of fiber, for example, a single PP fiber, there is an advantage in that recycling is easy.

The core material for a vacuum insulation panel according to the present disclosure is dried for about 2 hours or more on 70° C to 110° C after thermal bonding, and other drying processes may be used, but vacuum drying is the most preferred process.

The inventors of the present disclosure have found that the core material according to embodiments of the present disclosure is significantly improved in slipping phenomena even through a vacuum process, compared to a case in which a web is bonded using only a needle punching process. In addition, by laminating the outer layer which comprises a thermoplastic material capable of thermal bonding, for example, ES fiber, etc. therein, the outer layer serves as a support for the intermediate layer, thereby increasing the morphological stability of the intermediate layer.

In addition, in the case of using the thermal bonding method, since a curing process for evaporating water is not required compared to the chemical bonding method, it can exhibit the effect of cost reduction by 25% to 40%, and there is no risk of the adhesive to be non-uniformly applied. Further, wastewater treatment is unnecessary, and unlike the spray process, it is possible to form a thick web.

### Insulated container with core material

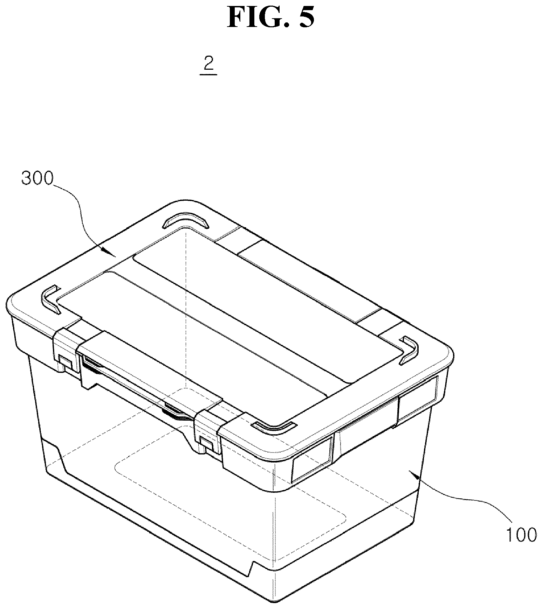

FIG. 5 illustrates an exemplary perspective view of an insulated container according to an embodiment of the present disclosure.

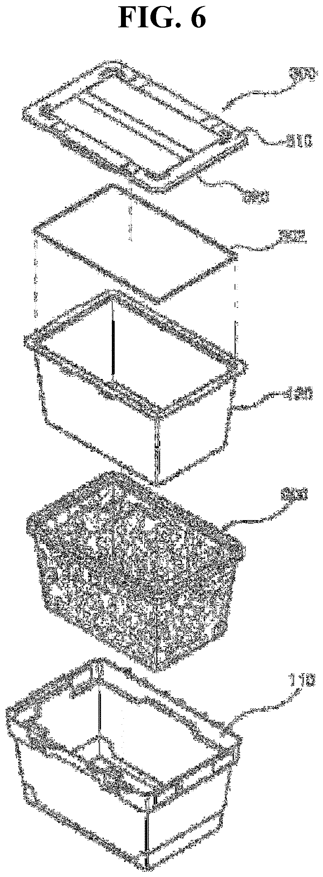

In reference to FIGs 5 and 6, the heat insulated container 2 according to an embodiment of the present disclosure may include a body 100 capable of accommodating an article, and a lid 300 that is combined with the main body 100 to cover the article accommodation space of the main body 100.

The insulated container 2 may include a vacuum insulation panel as described above with reference to FIGs 1-4 to minimize the heat loss of the accommodated article or inflow of heat from the outside. Specifically, the insulated container 2 uses the body 100 and the lid 300 made of a plastic material to obtain a basic thermal insulation effect from the material of the container itself, and a vacuum insulation panel is placed inside the body 100 and the lid 300 so that it is possible to obtain an additional thermal insulation effect by the vacuum insulation panel.

The body 100 of the insulated container 2 according to an embodiment of the present disclosure may include an outer body 110 and an inner body 120. Meanwhile, although only the lid 300 is illustrated in FIG. 6, the lid 300 may also include an outer lid 310 and an inner lid 320. The outer body 110 and the inner body 120, and the outer lid 310 and the inner lid 320 are made of a plastic material having low thermal conductivity to form a double plastic material structure, respectively.

A vacuum insulation panel may be disposed between the outer body 110 and the inner body 120 and between the outer lid 310 and the inner lid 320. Here, the vacuum insulation panel disposed between the outer body 110 and the inner body 120 and the vacuum insulation panel disposed between the outer lid 310 and the inner lid 320 may include the vacuum insulation panel as described above with reference to FIGs. 1 to 4.

To examine the improvement of the thermal insulation effect of the vacuum insulation panel according to the embodiments of the present disclosure, the thermal conductivity value was measured using the vacuum insulation panel according to the embodiments of the present disclosure under different conditions in the laboratory conditions. The lower the thermal conductivity value, the better the vacuum insulation panel.

### ▪ Common condition (materials used in the test and test conditions)

The degree of vacuum was carried out under the conditions of 10⁻² torr or less, and the adsorbent contained CaO was used and it was 8 g per piece, and was surrounded by nonwoven fabric. The machine used for needle punching was a single board-down stroke punching machine. The web feed speed of needle punching was performed at 1.9 m/min. A guarded hot plate (GHP) equipment of lambda-Meter EP500e was used at 25 °C for thermal conductivity measurement. The envelope was a PET film, which was composed of a sealing layer of LDPE/LLDPE and a composite film of aluminum with a thickness of 104 um.

The experimental condition of the outer layer containing ES fibers and the intermediate layer containing PET fibers comprised as the core material for a vacuum insulation panel was as follows. The ES used as the support layer has a 50/50 mixing ratio of PE/PP, a fineness (fiber thickness) of 6 D (denier), an average diameter of about 30 µm, and a melting point of 130°C to 170°C. The PET used as the main insulation layer has an average fiber thickness of 3D (denier) with an average diameter of about 17 um and a melting point of 265 °C. The examination was performed with the fibers with an average length of 51 mm, and the process heat temperature was 160 °C, and the needle depth was 12 mm.

Experimental conditions of the hydrophilic polypropylene nonwoven fabric used were as follows. PP fineness (fiber thickness) was 2.2 D (denier), the average diameter was about 19 um, and the melting point was about 160 °C. The process condition that the average length of the fiber was 40 mm and the needle depth was 11 mm was applied.

### Example 1. Comparison of density of nonwoven fabric depending on the change in the number of strokes during needle punching

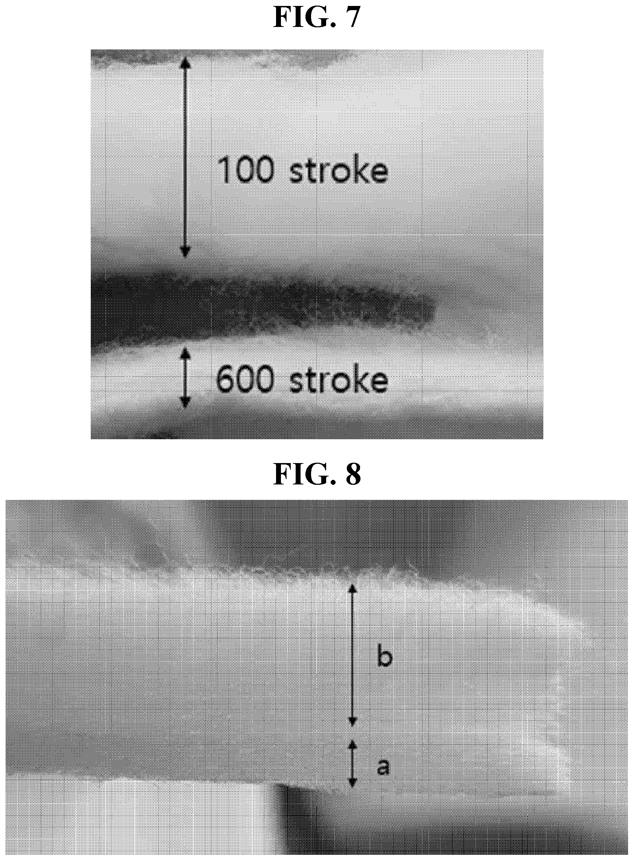

The density change of the nonwoven fabric was measured by varying the number of strokes of needle punching for a test piece prepared including 100 wt% hydrophilic polypropylene nonwoven fabric 200*200 mm² and one adsorbent. The thickness of the nonwoven fabric itself before forming a vacuum is shown, and the results are shown in Table 1 and FIG. 7.

**Table 1**

| Stroke (strokes/min) | Thickness (mm) |
|---|---|
| 100 | 8.5 |
| 300 | 7.63 |
| 600 | 6.18 |

As shown in Table 1 and Figure 7, as the number of strokes of needle punching increases, the thickness of the nonwoven fabric decreased, and it can be seen that the density increased at the same weight of 580 g/m².

### Example 2. Comparison of thermal conductivity of nonwoven fabric according to change in the number of strokes during needle punching

For test piece C to I prepared including 100 wt% hydrophilic polypropylene nonwoven fabric 200*200 mm² and one adsorbent, the change in the thermal conductivity of the nonwoven fabric was measured while varying the number of strokes of needle punching. The results are shown in Table 2.

**Table 2**

| Test Piece | Weight [g/m2] | Stroke (strokes/min) | Density [kg/m³] | Thermal Conductivity [mW/mK] |
|---|---|---|---|---|
| c | 400 | 100 | 386 | 12.171 |
| E | 580 | 100 | 366.7 | 12.789 |
| F | 580 | 300 | 365.8 | 13.642 |
| H | 400 | 400 | 348.5 | 13.855 |
| G | 580 | 600 | 364.6 | 14.984 |
| I | 400 | 800 | 366.2 | 16.607 |

As shown in Table 2 above, it could be seen that the thermal conductivity is improved when the number of strokes is minimized during needle punching. Specifically, it could be seen that when the number of strokes was set to 800, there is an effect of improving the thermal conductivity of about 5 mW/mK compared to the case where the number of strokes was 100. From this, it could be seen that the vacuum insulation panel according to the present disclosure has a clear improvement effect compared to the core material for the vacuum insulation panel manufactured through the needle punching process.

### Example 3. Comparison of thermal conductivity according to weight change

Changes of the thermal conductivity according to weight change was measured for test pieces B to E, which were prepared including one adsorbent and 100 wt% hydrophilic polypropylene nonwoven fabric 200*200 mm² as a sample. The results are shown in Table 3.

**Table 3**

| Test Piece | Weight [g/m2] | Density [kg/m³] | Thermal Conductivity [mW/mK] |
|---|---|---|---|
| B | 200 | 440.4 | 13.379 |
| C | 400 | 386 | 12.171 |
| D | 800 | 623.6 | 14.482 |
| E | 580 | 366.7 | 12.789 |

As shown in Table 3 above, as the weight of the test piece increased, it was confirmed that the thermal conductivity of the test piece with a medium weight was measured to be low, rather than showing a constant tendency of decreasing or increasing the thermal conductivity. That is, when the density is higher than a certain density, heat transfer in terms of thermal conductivity became active, and the thermal conductivity was the lowest in the weight range of about 300 to 600 gsm (g/m²).

### Example 4. Comparison of Insulator Performance

Test pieces A, C, J, and W were prepared from the raw materials as shown in Table 4 and were prepared as vacuum insulation panels. They all contained 8 g of adsorbent. A and C were the core material test pieces for vacuum insulation panels made only by needle punching, J was the core material test piece for ES/PET (needle punching, thermal bonding) vacuum insulation panel as described above, W was the core material test piece for glass wool vacuum insulation panel, X was the foamed polyurethane of type 2 No. 2 of KS M 3809, and Y was the foamed polypropylene. Test pieces X and Y made of foamed polyurethane and foamed polypropylene were not manufactured to vacuum insulation panels, because closed cells formed in the form of foaming agents show the same thermal conductivity as those produced in the form of vacuum insulation panels.

Test pieces A and C were prepared under the same conditions of 400 gsm and 100 strokes/min. Test piece J was prepared under the conditions of 320 gsm and 270 strokes/min, and test pieces W, X, and Y were not needle-punched. The thermal conductivity of the prepared test pieces was measured, and the results are shown in Table 4.

**Table 4**

| Test Piece | Material | Density [kg/mM] | Thermal Conductivity [mW/mK] |
|---|---|---|---|
| A | PET | 302.6 | 12.511 |
| C | PP | 231.7 | 10.489 |
| J | ES/PET | 327.56 | 8.584 |
| W | Glasswool | 537.2 | 10.844 |
| X | PU foam | 37.2 | 22.632 |
| Y | EPP | 29.1 | 36.94 |

As can be seen from Table 4 above, the test piece J according to the present disclosure exhibits particularly excellent thermal insulation effect.

Example 5. Comparison of thermal conductivity according to ES fiber content

Test pieces were prepared in the size of 200*200mm², and the adsorbent was not included. Test pieces J, K, L, and M were prepared in a+b two-layered structure, and test pieces N and O were prepared in a+b+a three-layered structure. a is an outer layer containing different ES contents, and b is an intermediate layer formed of PET fibers. As shown in Table 5, the thermal conductivity according to the ES fiber content (wt% based on the weight of the core material) contained in the outer layer a was measured. An example of a test piece of a+b two-layered structure may be referred to in FIG. 8, and a test piece of a three-layered structure of a+b+a may be one in which a layer is additionally laminated on the b layer of FIG 8.

**Table 5**

| Test Piece | Weight [g/m2] | ES Content [%] | Density [kg/m³] | Thermal Conductivity [mW/mK] |
|---|---|---|---|---|
| J | 320 | 21.9 | 327.7 | 8.509 |
| K | 370 | 18.9 | 332.9 | 8.635 |
| L | 470 | 14.9 | 320 | 10.797 |
| M | 410 | 51.2 | 323.9 | 12.522 |
| N | 540 | 25.9 | 322.5 | 11.033 |
| O | 520 | 61.5 | 325 | 16.509 |

As shown in Table 5 above, the vacuum insulation panel using the core material according to the present disclosure exhibited an initial thermal conductivity of about 18 mW/mK or less, and the thermal conductivity was the lowest when the ES content in the support layer was in the range of about 18 to about 22% by weight based on the weight of the core material.

### [Industrial Applicability]

The present disclosure provides a core material for a vacuum insulation panel which exhibits sufficient thermal insulation performance even at a thin thickness, does not exhibit a slipping phenomenon, etc. when undergoing the vacuum process, and provides improved durability when applied to a vacuum insulation panel and a method for manufacturing the same with improved handling and convenience in the manufacturing process.

Although the embodiments of the present disclosure have been described in detail above, the scope of the present disclosure is not limited thereto, and various modifications and improvements made by using the basic concept of the present disclosure as defined in the following claims by those of ordinary skill in the art in the technical field to which the present disclosure belongs to are within the scope of the present disclosure.

## Claims

1. A core material for a vacuum insulation panel, comprising:
an intermediate layer comprising a polyester fiber or a polypropylene (PP) fiber; and
an outer layer stacked on the intermediate layer;
wherein the outer layer comprises a thermoplastic fiber capable of thermal bonding.

2. The core material according to claim 1, wherein the thermoplastic fiber is selected from an ethylene-propylene side by side (ES) fiber, a polypropylene (PP) fiber, a low-melting polyethylene terephthalate (LMPET) fiber, or a composite fiber thereof.

3. The core material according to claim 1, wherein the polyester fiber is a polyethylene terephthalate (PET) fiber, and the thermoplastic fiber is an ethylene-propylene side by side (ES) fiber.

4. The core material according to claim 1, wherein the thermoplastic fiber in the outer layer is comprised in an amount of 15 to 25% by weight based on the weight of the core material.

5. The core material according to claim 1, wherein a plurality of the outer layer and the intermediate layer is comprised, wherein the outer layer and the intermediate layer are alternately stacked.

6. The core material according to claim 1, wherein the intermediate layer contains 100% by weight of polypropylene (PP) fibers.

7. The core material according to claim 6, wherein a plurality of the intermediate layers is stacked, and the outer layers are stacked on the uppermost and lowermost end of the intermediate layer.

8. The core material according to claim 1 having a thickness of about 3 to about 7 mm after vacuum.

9. A vacuum insulation panel comprising the core material according to claim 1.

10. The vacuum insulation panel according to claim 9, further comprising an envelope for vacuum-packing the core material.

11. The vacuum insulation panel according to claim 10, further comprising a getter for adsorbing and removing moisture or gas.

12. The vacuum insulation panel according to claim 9, wherein the initial thermal conductivity is about 18 mW/mK or less.

13. An insulated container comprising the vacuum insulation panel according to claim 9.

14. A method for manufacturing the core material for a vacuum insulation panel of claim 1, comprising:
carding polyester fibers or polypropylene (PP) fibers;
carding a thermoplastic fiber capable of thermal bonding;
stacking and arranging the carded fibers so that the thermoplastic fibers are positioned on an outer layer when stacked; and
forming a core material by bonding the fibers stacked and arranged through thermal bonding.

15. The method according to claim 14, further comprising the step of partially bonding the fibers stacked and arranged through minimal needle punching between the step of stacking and the step of forming the core material.

16. A method for manufacturing the core material for a vacuum insulation panel according to claim 1, comprising:
forming an intermediate layer comprising polyester fibers or polypropylene (PP) fibers by needle punching;
forming an outer layer comprising thermoplastic fibers by spun bonding or thermal bonding; and
stacking the outer layer and the intermediate layer.
